# EUROPÄISCHE PATENTANMELDUNG

(11) **EP 3 925 741 A1**
(43) Veröffentlichungstag der Anmeldung: **22.12.2021**
(21) Anmeldenummer: 20212628.0
(22) Anmeldetag: 04.05.2015
(51) Int. Cl.: B26D 5/30, B23K 26/38, B26D 5/00, G06K 15/22, B23K 26/02, B26F 1/38

(54) **VERFAHREN ZUM BEARBEITEN, INSBESONDERE SCHNEIDEN, EINER AUF EINEM WERKSTÜCK AUFGEBRACHTEN GRAPHIK**

(30) Priorität: 19.05.2014 AT 503532014
(62) Teilanmeldung aus: 15728380.5
(71) Anmelder: Trotec Laser GmbH, 4614 Marchtrenk (AT)
(72) Erfinder: Blumenschein, Kurt, 4592 Leonstein (AT); Fazeny, Stephan, 4810 Gmunden (AT)

(57) **Zusammenfassung**

Die Erfindung beschreibt ein Verfahren zum Bearbeiten, insbesondere Schneiden, einer auf einem Werkstück (7) aufgebrachten Graphik (17), insbesondere eines Graphikbereichs, das folgenden Schritten umfasst:
- Erstellen und/oder Laden eines Bearbeitungsjobs (16) mit einer Graphik (17) bzw. einem Graphikbereich und Erkennungsmerkmale (28) an einem Anzeigeelement (15),
- Aufbringen der Erkennungsmerkmale (28) und der Graphik (17) bzw. dem Graphikbereich am Werkstück (7);
- Anordnen des Werkstückes (7) in einem Bearbeitungsbereich eines Bearbeitungsgerätes (1), insbesondere einem Laserplotter (2) mit einer Optikeinheit (30) zum Erfassen der Erkennungsmerkmale (28);
- Erfassen bzw. Detektieren des Werkstückes (7), insbesondere der Erkennungsmerkmale (28), um die Position und Ausrichtung des Werkstückes (7), insbesondere der aufgebrachten Graphik (17) bzw. des Graphikbereichs, im Bearbeitungsbereich zu ermitteln;
- Durchführen des Bearbeitungsprozesses nach erfolgreicher Erkennung des Werkstückes (7), insbesondere der Graphik (17) bzw. des Graphikbereiches, wobei
- nach dem Erstellen des Bearbeitungsjobs (16) und vor dem Start der Erfassung bzw. Detektieren des Werkstückes (7) ein Analyseprozess zum Festlegen des Ablaufes der nacheinander, abzufragenden Erkennungsmerkmale (28) durchgeführt wird;
- wobei die Graphik (17) bzw. der Graphikbereich in mehrere Sektoren (37,38,39,40), insbesondere in vier Sektoren (37,38,39,40) aufgeteilt wird;
- wobei als erstes abzufragendes Erkennungsmerkmal (28) ein Erkennungsmerkmal (28) im ersten Sektor (37,38,39,40) ermittelt und festgelegt wird;
- worauf eine zweites abzufragendes Erkennungsmerkmal (28) in einem weiteren Sektor (37,38,39,40), insbesondere im diagonalen Sektor (37,38,39,40), ermittelt und festgelegt wird;
- und anschließend die weiteren Erkennungsmerkmale (28) aufeinanderfolgend vorzugsweise immer jene Erkennungsmerkmale (28) mit dem kürzesten Verstellweg des Lasers (5,6), ermittelt und festgelegt werden.

## Beschreibung

Die Erfindung betrifft ein Verfahren zum Bearbeiten, insbesondere Schneiden, einer auf einem Werkstück (7) aufgebrachten Graphik (17), insbesondere eines Graphikbereichs,, wie es in dem Oberbegriff des Anspruches 1 beschrieben ist.

Aus dem Stand der Technik, insbesondere der US 6 619 167 A, der US 6 619 168 A, der US 6 672 187 A und der US 6 772 661 A, sind bereits System bekannt, bei denen eine auf eine Platte bzw. Werkstück aufgedruckte Graphik ausgeschnitten wird. Dabei wird zuerst ein Bearbeitungsjob mit einer Graphik bzw. einem Graphikbereich und Registermarken an einem Anzeigeelement, insbesondere einem Computer, erstellen und/oder geladen. Anschließend wird die Graphik und die Registermarke auf ein Werkstück aufgedruckt, worauf das Werkstückes in einem Bearbeitungsbereich eines Bearbeitungsgerätes, insbesondere einem Laserplotter mit einer Optikeinheit zum Erfassen der Registermarken, positioniert wird. Nachdem der Bearbeitungsprozess gestartet wurde, erfolgt eine Erfassung bzw. Detektierung des Werkstückes, insbesondere der Registermarken, um die Position und Ausrichtung des Werkstückes, insbesondere der aufgebrachten Graphik bzw. des Graphikbereichs, im Bearbeitungsbereich des Laserplotters zu ermitteln, worauf der Bearbeitungsprozess zum Ausschneiden der Graphik durchgeführt wird.

Nachteilig bei dem obgenannten Dokumenten ist, dass das erstmalige Positionieren des Werkstückes und die Einrichtung am Anzeigeelement, insbesondere am Computer, für den Nutzer relativ aufwendig ist.

Die Aufgabe der Erfindung liegt darin, einen Verfahren, eine Einrichtung zur Durchführung des Verfahrens und einen Laserplotter zu schaffen, bei dem das Handling, insbesondere die Positionierung des Werkstückes, wesentlich verbessert wird. Eine weitere Aufgabe liegt darin, die Nachteile des Standes der Technik möglichst zu beheben.

Die Aufgabe der Erfindung wird durch einen Verfahren derart gelöst, dass nach dem Erstellen des Bearbeitungsjobs und vor dem Start der Erfassung bzw. Detektieren des Werkstückes ein Analyseprozess zum Festlegen des Ablaufes der nacheinander, abzufragenden Erkennungsmerkmale durchgeführt wird, wobei die Graphik bzw. der Graphikbereich in mehrere Sektoren, insbesondere in vier Sektoren aufgeteilt wird, wobei als erstes abzufragendes Erkennungsmerkmal ein Erkennungsmerkmal im ersten Sektor ermittelt und festgelegt wird, worauf eine zweites abzufragendes Erkennungsmerkmal in einem weiteren Sektor, insbesondere im diagonalen Sektor, ermittelt und festgelegt wird und anschließend die weiteren Erkennungsmerkmale aufeinanderfolgend vorzugsweise immer jene Erkennungsmerkmale mit dem kürzesten Verstellweg des Lasers ermittelt und festgelegt werden.

Vorteilhaft ist hierbei, dass bereits nach der zweiten Passmarke die Rotation des Werkstückes deutlich genauer bekannt ist, als wenn nahe beieinander liegende Passmarken verwendet werden, und dadurch nachfolgende Fehlerkennungen weitestgehend ausgeschlossen werden können.

Von Vorteil ist ein Maßnahme, bei der als erster Sektor jener Sektor auserwählt wird, der der Ausgangsposition bzw. einer Abstellposition des Lasers am nächsten liegt, da dadurch der Sektor mit dem kürzesten Verstellweg für die erste Position gewählt wird.

Bei einer Maßnahme, bei der als erstes Erkennungsmerkmal jenes Erkennungsmerkmale im erste Sektor ermittelt wird, die der Ausgangsposition der Fokussiereinheit am nächsten liegt, wird in vorteilhafter Weise erreicht, dass eine schellst mögliches verstellen erzielt wird.

Es ist aber auch die Maßnahme von Vorteil, bei der als zweites Erkennungsmerkmale jenes Erkennungsmerkmal im zweiten Sektor ermittelt wird, die der Ausgangsposition der Fokussiereinheit oder der ersten auserwählten Erkennungsmerkmal am nächsten liegt, da dadurch wiederum der kürzeste und schnellste Weg für das nächste Erkennungsmerkmal verwendet wird. Gleichzeitig wird eine hohe Genauigkeit und hohe Geschwindigkeit erreicht.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: eine schematische Darstellung einer Einrichtung mit einem Laserplotters und damit verbundenen Anzeigeelement;
- Fig. 2: eine schaubildliche Darstellung eines Teilausschnittes der Einrichtung mit geladenen Bearbeitungsjob und eingelegtem Werkstückes;
- Fig.3: eine schaubildliche Darstellung eines Teilausschnittes der Einrichtung mit auf einem Erkennungsmerkmal positionierten Lasier-Pointer;
- Fig.4: eine schaubildliche Darstellung eines Teilausschnittes der Einrichtung, bei der die Graphik am Anzeigeelement an die Position des Laser-Pointer angepasst wurde;
- Fig.5: eine schaubildliche Darstellung eines Teilausschnittes der Einrichtung, insbesondere des Anzeigeelemente, zur Festlegung der abzufragenden Erkennungsmerkmale;
- Fig.6: eine schaubildliche Darstellung eines Teilausschnittes der Einrichtung mit geänderten Werkzeugformat;
- Fig.7: eine schaubildliche Darstellung eines Teilausschnittes der Einrichtung, bei der die Graphik am Anzeigeelement an die tatsächliche Position des Werkstückes nach einem Bearbeitungsprozess dargestellt ist;
- Fig.8: eine schaubildliche Darstellung eines Teilausschnittes der Einrichtung für die Verwendung zum Gravieren und/oder Schneiden eine Werkstückes.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

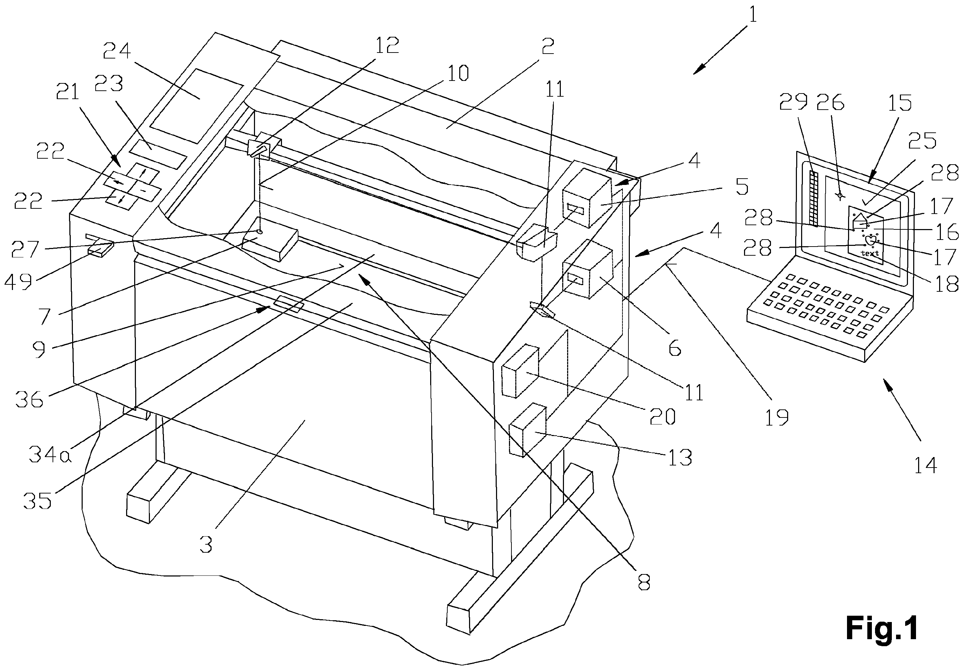

In Fig. 1 ist ein Bearbeitungsgerät 1, insbesondere ein Laserplotter 2, oder auch Lasergravierer genannt, schematisch dargestellt, bei dem in einem Gehäuse 3 zumindest eine, insbesondere zwei Strahlenquellen 4 in Form von Lasern 5, 6 angeordnet und betrieben werden. Die Laser 5 und 6 wirken vorzugsweise abwechselnd auf das zu bearbeitende Werkstück 7 ein, wobei das Werkstück 7 in einem Bearbeitungsbereich 8 des Laserplotters 2, insbesondere auf einem Bearbeitungstisch 9, positioniert ist. Ein von der Strahlenquelle 4 abgegebener Laserstrahl 10 wird über Umlenkelemente 11 an zumindest eine für beide Strahlenquellen 4 ausgebildete verfahrbare Fokussiereinheit 12 gesendet, von der der Laserstrahl 10 in Richtung Werkstück 7 abgelenkt wird und zur Bearbeitung fokussiert wird. Die Steuerung, insbesondere die Positionssteuerung des Laserstrahls 10 zum Werkstück 7 erfolgt über eine in einer Steuereinheit 13 laufende Software, wobei an einer externen Komponente 14, insbesondere an einem Anzeigeelement 15 in Form eines Computers 15 oder einem Steuergerät, ein Bearbeitungsjob 16 mit einer Grafik 17 und/oder ein Text 18, erstellt und/oder geladen wird, welcher an die Steuereinheit 13 des Laserplotters 2 über eine Datenverbindung 19 übergeben wird, die aus einer hinterlegten Datenbank 20 eine Konvertierung der übergebenen Daten, insbesondere des Bearbeitungsjobs 16 mit der Grafik 17 und/oder des Textes 18, zum Steuern der einzelnen Elemente des Laserplotters 2 vornimmt.

Weiters weißt der Laserplotter 2 Eingabemittel 21, insbesondere Richtungstasten 22 zum Verfahren und Positionieren der Fokuseinheit 12 und somit des Laserstrahls 10 auf. Dabei ist es möglich das zusätzliche weitere Eingabetasten 21 beispielsweise in Form einer Bestätigungstaste 23 oder dergleichen vorhanden sind. Es ist auch möglich, dass am Bearbeitungsgerät 1 ein Anzeigemonitor 24 vorhanden ist, an dem beispielsweise dieselben Funktionen und Anzeigen entsprechend dem Anzeigeelemente 15 dargestellt wird. Dieser Anzeigemonitor 24 kann dabei als Touch-Monitor 24 ausgeführt sein, sodass der Benutzer durch Berührung die Steuerung bzw. Eingaben vornehmen kann bzw. dies über die Eingabemitteln 21 vornimmt.

Auf eine weitere detaillierten Beschreibung des mechanischen Aufbau eines derartigen Laserplotters 2 wird nicht mehr näher eingegangen, da dieser aus den Stand der Technik, insbesondere aus der WO 1999/038643 A der Anmelderin, bereits bekannt ist und aus dieser entnommen werden kann. Selbstverständlich ist auch ein Aufbau aus anderen aus dem Stand der Technik bekannten Laserplottern 2 möglich.

Es ist nun vorgesehen, dass eine Vereinfachung der Steuerung des Laserplotters 2 für den User bei einem besonderen Bearbeitungsprozess geschaffen wird, insbesondere das Handling für die Positionierung des Werkstückes 7 wesentlich verbessert wird, sodass die Bedienung für den Benutzer erleichtert wird und es zur Minimierung von Fehlern kommt.

Um die Benutzerfreundlichkeit zu erhöhen, ist vorgesehen, dass an dem Anzeigeelement 15 oder am Laserplotter 2 angeordnete Anzeigemonitor 24 ein Arbeitsbereich 25 mit einer Laserposition 26 korrespondierend zum Bearbeitungsbereich 8 des Laserplotters 2 und der Position des Laserstrahls 10 der Laser 5,6 bzw. der Fokussiereinheit 12, die durch einen üblichen Laser-Pointer 27 im Bearbeitungsbereich 8 sichtbar gemacht wird, dargestellt ist. Dabei sind ein oder mehrere gleiche oder unterschiedliche Bearbeitungsjob 16 (wie schematisch dargestellt) mit der Graphik 17 bzw. einem Graphikbereich und dazugehörigen Erkennungsmerkmalen 28 ladbar oder können vom User erstellt werden, wobei die Graphik 17 bzw. der Graphikbereich mit den Erkennungsmerkmalen 28 am dargestellten Arbeitsbereich 25 verschiebbar ausgebildet sind, sodass die Graphik 17 bzw. der Graphikbereich zur Laserposition 26 oder die Laserposition 26 an die Graphik 17 bzw. den Graphikbereich anpassbar ist. Dazu kann der User am Laserplotter 2 über die Eingabemittel 21 eine entsprechende Verstellung vornehmen oder die Verstellung der Fokussiereinheit 12 über einen Einstell- und/oder Steuerbereich 29 am Anzeigeelement 15 bzw. durch einfaches Verschieben der Laserposition 26 mit einer Maus bzw. Zeiger des Computer 15 durchführen. Zusätzlich ist es möglich, dass im Bearbeitungsbereich 8 des Laserplotters 2 Mittel zum Positionieren des Werkstückes 7, insbesondere Positionierschienen angeordnet sind, sodass der User beim Einlegen des Werkstückes 7 das Werkstück 7 an diese Mittel anlegen kann und somit das Werkstück 7 immer annähernd an die gleiche Position im Bearbeitungsbereich 8 abgelegt wird.

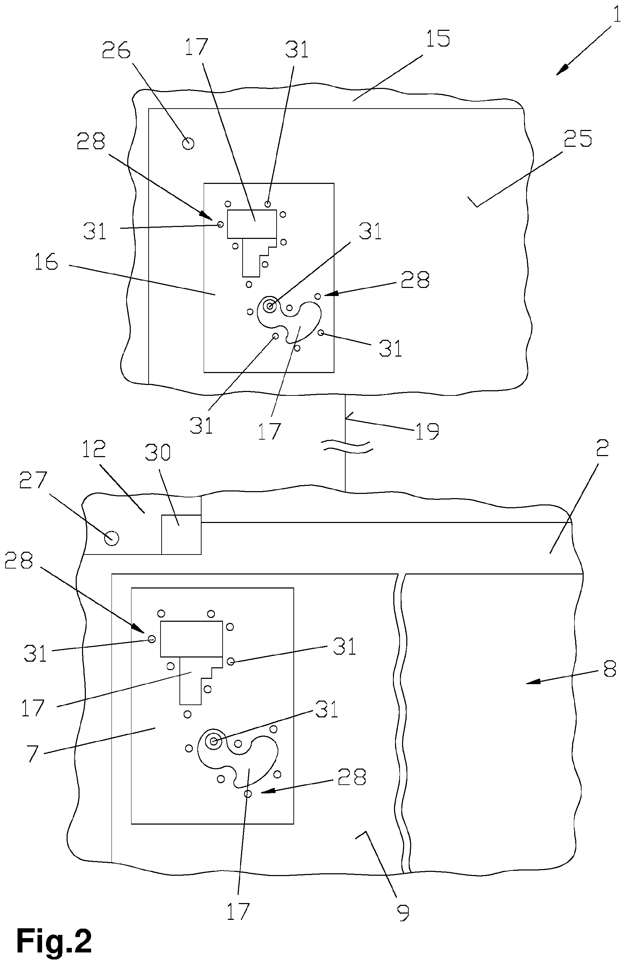

In den Fig. 2 bis 4 ist nunmehr schematisch ein Ablauf für die Handhabung des Laserplotters 2 zum Abwickeln eines Bearbeitungsprozesses beschrieben, bei dem nunmehr ein Teilausschnitt des Computers 15, insbesondere des darin angezeigten Arbeitsbereich 25, und ein Teilausschnitt des Laserplotters 2, insbesondere des Bearbeitungsbereichs 8, vereinfacht und schematisch dargestellt ist, sodass der Ablauf des Verfahrens ersichtlich wird.

Dabei wird zuerst vom User ein Bearbeitungsjob 16 erstellt oder ein bereits erstellter Bearbeitungsjob 16 geladen. Der Bearbeitungsjob 16 beinhaltet eine Graphik 17 bzw. einem Graphikbereich und Erkennungsmerkmalen 28, die an der externen Komponente 14, insbesondere dem Computer 15, am Arbeitsbereich 25 angezeigt bzw. dargestellt oder erstellt werden, wie dies in Fig.2 im Arbeitsbereich 25 dargestellt ist. Anschließend werden die Erkennungsmerkmale 28 und die Graphik 17 bzw. der Graphikbereich am Werkstück 7 aufgebracht, wobei dies durch beispielsweise Ausdrucken auf das Werkstück 7 erfolgen kann. Hierzu ist es auch möglich, dass das Aufbringen unabhängig vom Computer 15 oder dem Laserplotter 2 durch andere Geräte, insbesondere eine Druckmaschine, erfolgen kann, die jedoch den selben Bearbeitungsjob 16 verarbeitet.

Nachdem das Werkstück 7 bedruckt wurde, wird das Werkstückes 7 in dem Bearbeitungsbereich 8 des Laserplotters 2 mit einer Optikeinheit 30 zum Erfassen der Erkennungsmerkmale 28 angeordnet (siehe Fig.2 Bearbeitungstisch 9), wobei hierzu entsprechen Hilfsmittel, wie Anschlagschienen 34a oder der gleichen als Mittel zum Positionieren verwendet werden können. Anschließend erfolgt durch Start des Bearbeitungsprozesses das Erfassen bzw. Detektieren des Werkstückes 7, insbesondere der Erkennungsmerkmale 28, um die Position und Ausrichtung des Werkstückes 7, insbesondere der aufgebrachten Graphik 17 bzw. des Graphikbereichs, im Bearbeitungsbereich 8 zu ermitteln, d.h., dass eine automatische Lagebestimmung des Werkstückes 7 vorgenommen wird. Anschließend wird der Bearbeitungsprozesses nach erfolgreicher Erkennung des Werkstückes 7, insbesondere der Graphik 17 bzw. des Graphikbereiches, durchgeführt, wobei hierzu vorzugsweise die Graphik 17 durch den Laser 5 oder 6 ausgeschnitten wird, wie dies aus dem Stand der Technik bekannt ist.

Da bei derartigen Bearbeitungsprozessen oftmals unterschiedlich Werkstücke 7 mit unterschiedlichsten Formaten bzw. Formen und darauf aufgedruckten Graphiken 17 verarbeitet werden müssen, ist es von Vorteil, wenn das erstmalige Positionieren für den User sehr einfach und schnell von statt geht.

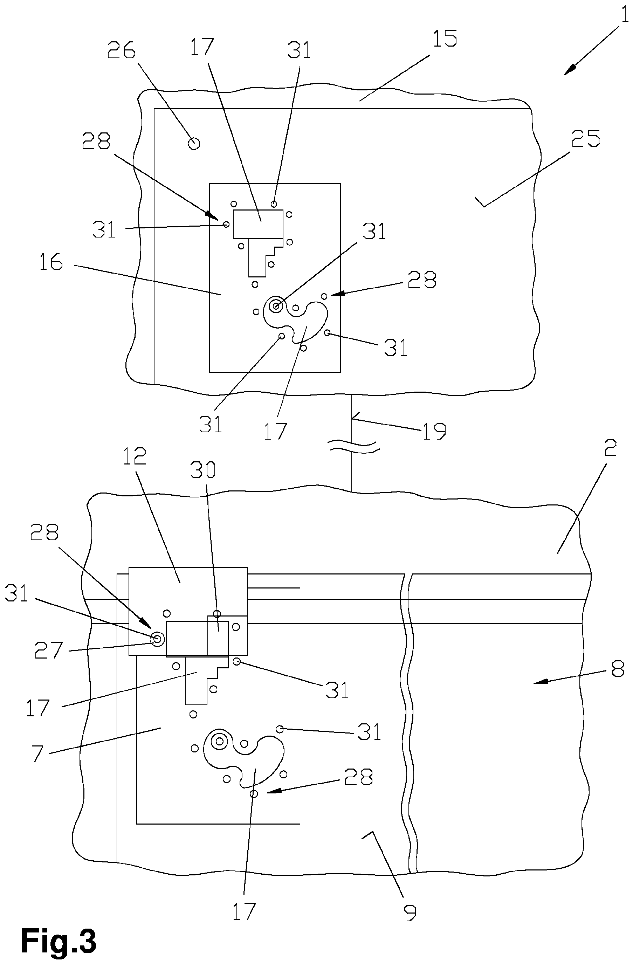

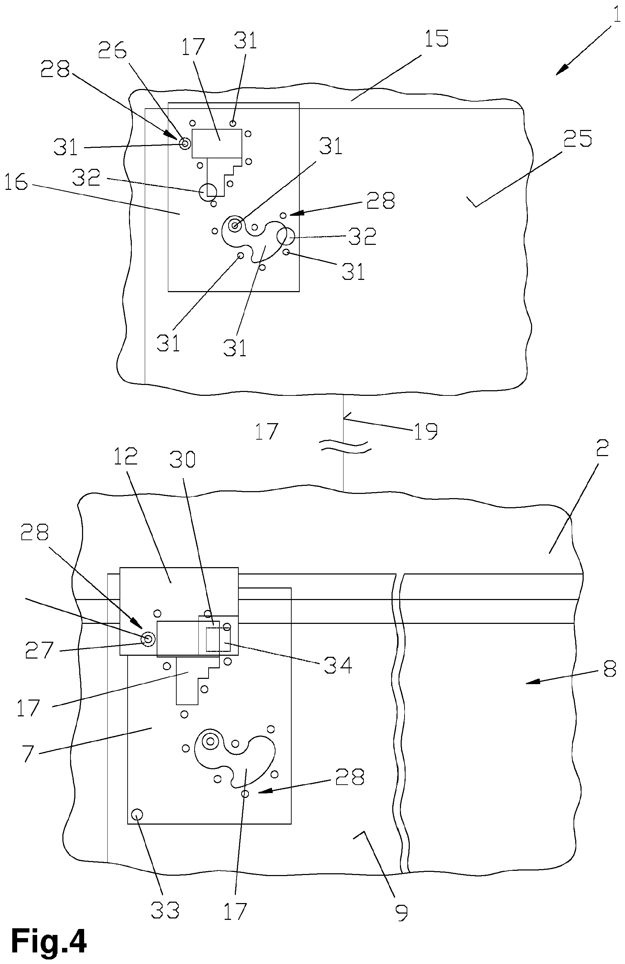

Dabei ist nun vorgesehen, dass für die Positionierung, insbesondere beim erstmaligen Durchführen, der User nach dem Einlegen des Werkstückes 7 (Fig.2) in dem Bearbeitungsbereich 8 des Laserplotters 2 den Laser-Pointer 27 des Lasers 5,6, der an der Fokuseinheit 12 angeordnet ist und aus Sicherheitsgründen stets vorhanden ist, auf ein beliebiges Erkennungsmerkmale 28 positioniert, d.h., dass der User einfach über die Eingabemittel 21, insbesondere die Richtungstasten 22, den Laser-Pointer 27 derart verfährt, dass dieser auf einer belieb vom User gewählten Erkennungsmerkmal 28 ausgerichtet ist bzw. auf diese strahlt, wie dies in Fig. 3 ersichtlich ist. Anschließend verschiebt der User das auf dem Anzeigeelemente 15 dargestelltes Bearbeitungsbild der Graphik 17 bzw. des Graphikbereiches mit dem dazugehörigen Erkennungsmerkmal 28 am Anzeigeelement 15 derart, dass nunmehr die am Anzeigeelement 15 angezeigte Laserposition 26 mit der mit dem Laser-Pointer 27 markierten Erkennungsmerkmal 28 übereinstimmt, wie dies in Fig. 4 ersichtlich ist. Somit kann durch einfaches Verschieben der Graphik 17 oder umgekehrt durch verschieben der Laserposition 26 am Anzeigeelement 15 auf das entsprechende Erkennungsmerkmal 28 die Position am Anzeigeelement 15 und am Laserplotter 2 abgestimmt werden, sodass beim Start eines Bearbeitungsprozesses die richtigen Daten, insbesondere die Positionen für den Laserstrahl 10 ermittelt und übertragen werden können, sodass die entsprechend hinterlegten Funktionen zu den entsprechenden Positionen geladen und erzeugt werden können, wie dies aus dem Stand der Technik für derartige Bearbeitungsprozesse bekannt ist.

Für die Erkennung des Werkstückes 7 bzw. der Graphik 17 ist es notwendig, dass entsprechende Erkennungsmerkmale 28 vorhanden sind, die vom Laserplotter 2, insbesondere von einer Optikeinheit 30, erkannt wird. Die Optikeinheit 30 ist dabei vorzugsweise aus einer Kamera gebildet, die einen bestimmten Bereich vom Bearbeitungstisch 9 aufnimmt, wobei entsprechende Einstellmöglichkeiten, wie der Kontrast, die Helligkeit, die Bildgröße, usw., am Computer 15 vornehmen kann. Vorzugsweise werden die Erkennungsmerkmale 28 durch Registermarken 31, wie mit Kreisen dargestellt, und/oder Graphikelement 32, wie durch ein strichlierten Kreis in Fig. 4 angedeutet, und/oder Werkstückelement 33, wie beispielsweise eine Zentrierbohrung gemäß Fig.4, gebildet, wobei die Registermarken 31 zusätzlich aufgebracht werden, wogegen die Graphikelemente 32 und/oder Werkstückelemente 33 aus der Graphik 17 bzw. dem Graphikbereich oder dem dargestellte Werkstück 7 ausgewählt und festgelegt werden. Da bei dem beschriebenen vereinfachten Handlings-Verfahren die Positionierung über den Laser-Pointer 27 erfolgt, muss eine automatische Autokorrektor durchgeführt werden, da die Optikeinheit 30 zum Erkennen der Erkennungsmerkmale 28 nicht mit der Laser-Pointer-Position übereinstimmt, d.h., dass zum Erkennen und Erfassen der mit dem Laser-Pointer 27 markierten Erkennungsmerkmal 28 die Autokorrektur durchgeführt wird, bei der durch automatischen Verfahren der Fokussiereinheit 12 die Optikeinheit 30 über diesem Erkennungsmerkmal 28 positioniert wird. Somit kann von der Optikeinheit 30 das Erkennungsmerkmal 28 aufgenommen werden und gleichzeitig überprüft werden, ob die Einstellen zum Erkennen und Auswerten funktionieren, d.h., dass nach dem Positionieren die Optikeinheit 30 das Erkennungsmerkmal 28 aufnimmt und eine Erkennung durchgeführt wird, um festzustellen, ob eine reibungslose Erkennung möglich ist. Zur Durchführung der Autokorrektur ist ein Verstellweg zwischen dem Laser-Pointer 27 und der Optikeinheit 30, insbesondere eines Zentrum der Optikeinheit 30, hinterlegt, sodass bei einem Tausch der Fokussiereinheit 12, an dem die Optikeinheit 30 und der Laser-Pointer 27 angeordnet sind, entsprechend an die neue Fokussiereinheit 12 angepasst werden kann. Selbstverständlich können auch weitere benötigte Parameter hinterlegt sein und verändert werden.

Grundsätzlich ist zu erwähnen, dass zum Erkennen eines Erkennungsmerkmals 28 der Laserplotter 2 die Optikeinheit 30 derart an die vorgegeben Position verfährt, dass das Erkennungsmerkmal 28 innerhalb eines definierbaren Suchfensters 34, strichliert in Fig. 4 dargestellt, der Optikeinheit 30 angeordnet wird. Dabei ist es jedoch nicht unbedingt notwendig, dass das Erkennungsmerkmal 28 im Zentrum angeordnet sein muss, sondern dies lediglich zumindest teilweise jedoch vorzugsweise vollständig dieses im Suchtfenster 34 vorhanden sein muss, sodass dieses als Erkennungsmerkmal 28 erkannt wird. Liegt eine Verschiebung zum Zentrum des Suchtfensters 34 oder zu einem definierten Punkt im Suchtfenster 34 vor, so wird beim Erkennen der Erkennungsmerkmal 28 innerhalb des Suchfenster 34 der Optikeinheit 30 die Optikeinheit 30 und der damit gekoppelt Laser 5, 6 bzw. Laserstrahl 10 derart verstellt, dass das Erkennungsmerkmal 28 im Zentrum des Suchfenster 34 positioniert wird oder dass bei einer Erkennung des Erkennungsmerkmales 28 innerhalb des Suchfenster 34 die Position des Erkennungsmerkmals 28 zum Zentrum des Suchfenster 34 bzw. einer dem Suchfenster 34 zugeordneten Ausgangsposition bzw. definierten Punkt berechnet wird. Wird eine Verschiebung ins Zentrum des Suchfensters 34 vorgenommen, so ist es möglich, dass eine definierte Anzahl von Zentrierversuchen zum Zentrieren der Erkennungsmerkmals 28 im Suchfenster 34 hinterlegt werden, wobei anschließend der Bearbeitungsprozess gestoppt wird und manuell fortgeführt werden kann, d.h., dass die Anzahl der Versuche beschränkt sind, sodass bei schwer erkennbaren Erkennungsmerkmalen 28 nicht die Möglichkeit entsteht, dass der Laserplotter 2 ewig versucht eine Zentrierung vorzunehmen. Der User kann somit viel schneller in den Bearbeitungsprozess eingreifen. Hierbei ist es auch möglich, dass bei Nicht-Erkennung eines Erkennungsmerkmal 28 durch Betätigen eines Eingabemittel 21 am Laserplotter 2 oder durch Aktivierung eines Buttons am Anzeigeelement 15 die nicht erkannte Erkennungsmerkmal 28 übersprungen wird und der Suchvorgang bei der nächsten festgelegten Erkennungsmerkmal 28 fortgeführt wird oder manuell das entsprechende Erkennungsmerkmal 28 am Laserplotter 2 durch Ansteuern über die Eingabemitteln 21 eingestellt wird, worauf der Bearbeitungsprozess fortgeführt wird. Darüber hinaus ist es möglich, dass bei Nicht-Erkennung einer Erkennungsmerkmal 28 und einem darauf folgenden Bearbeitungsprozess-Stopp eine Fehlerkorrektur der Laserposition am Laserplotter 2 durch Betätigen von Eingabemitteln 21 erfolgt, wobei die relative Position der Laserposition 26 zur Graphik 17 bzw. zum Graphikbereich und/oder den Erkennungsmerkmal 28 am Anzeigeelemente 15 angezeigt wird, d.h., dass beispielsweise beim ersten Suchvorgang das erste Erkennungsmerkmal 28 nicht erkannt wird, sodass der Nutzer manuell die erste Position anfahren kann, die auch am Anzeigeelement 15 angezeigt wird.

Oftmals ist es der Fall, dass nach dem erstmaligen Positionieren bzw. Abstimmen der Position im Laserplotter 2 zum Computer 15 ein weiterer gleicher Bearbeitungsprozess durchgeführt werden muss. Damit auch hier eine hohe Bedienerfreundlichkeit geschaffen wird, soll das Starten eines neuen gleichen Bearbeitungsprozess für den User möglich einfach sein. Hierzu wird nach Beendigung des Bearbeitungsprozess das Werkstück 7 aus dem Bearbeitungsbereich 8 entfernt und ein neues Werkstück 7 eingelegt. Das neue Werkstück 7 wird dabei an die gleiche Position als das zuvor bearbeitete Werkstück 7 positioniert, wozu im Bearbeitungsbereich 8 des Laserplotters 2 Mittel, insbesondere die Anschlagschienen34a, zum Positionieren des Werkstückes 7, wie in Fig. 1 schematisch dargestellt, angeordnet sind, worauf der User einen Schutzdeckel 35 für den Bearbeitungsbereich 8 schließt. Das Schließen des Schutzdeckel 35 wird dabei über ein Erkennungsmittel 36, insbesondere einen Sensorkontakt, erkannt, wobei aus Sicherheitsgründen ohne Schließen des Schutzdeckels 35 kein Betrieb des Lasers 5, 6 stattfinden darf. Nachdem also der User den Schutzdeckel 35 geschlossen hat und dies vom Erkennungsmittel 36 erkannt wurde, wird durch Aktivierung eines Eingabemittels 21, insbesondere des Bestätigungsmittels 23, ein neuer Bearbeitungsprozess am Laserplotter 2 gestartet, sodass der User nunmehr nicht, wie aus dem Stand der Technik bekannt, den Start eines neuen Bearbeitungsprozesses am Computer 15 durchführen muss, sondern direkt am Laserplotter 2 starten kann. Selbstverständlich ist es dabei möglich, dass dazu ein eigenständiges Eingabemittel 21 angeordnet und verwendet werden kann.

Aufgrund einer Steuerung ist es jedoch auch möglich, dass automatisch durch Schließen des Schutzdeckels 35 für den Bearbeitungsbereich 8 am Laserplotter 2 ein neuer Bearbeitungsprozess gestartet wird. Dies kann insofern erfolgen, da eine Laserleistung zum Bearbeiten des Werkstückes 7 nach Erkennen des ersten Erkennungsmerkmals 28, insbesondere einer Registermarke 31 und/oder einem Graphikelement 32 und/oder einem Werkstückelement 33, für den Bearbeitungsprozess gestartet bzw. erhöht wird, d.h., dass nach dem Schließen des Schutzdeckels 35 zuerst mit reduziert oder abgeschalteter Laserleistung das erste oder eine definierte Anzahl von Erkennungsmerkmal 28 angefahren und erkannt wird, worauf die Laserleistung zum Bearbeiten, insbesondere zum Schneiden, des Werkstückes 7 erhöht wird. Dabei ist es aber auch möglich, dass zuerst alle Erkennungsmerkmale 28 mit reduzierter oder ausgeschalteter Laserleistung erkannt werden und erst anschließend für den Bearbeitungsprozess die Laserleistung entsprechend den eingestellten Werten kurz zuvor erhöht wird.

Bei einem derartigen Vorgehen ist es von Vorteil, wenn beim Aktivieren eines neuen Bearbeitungsprozess direkt am Laserplotter 2 bei Nicht-Erkennung des ersten Erkennungsmerkmals 28 der Bearbeitungsprozesse gestoppt wird, was beispielsweise passieren kann, wenn das Werkstück 7 auf die falsche Position gelegt wird. Der User kann anschließend durch manuelles verstellen über die Richtungstasten 22 eine Positionierung vornehmen und den Bearbeitungsprozess durch Betätigen der Bestätigungstaste 23 fortführen. Wird der Bearbeitungsprozess anschließend neuerlich unterbrochen, so hat der User wiederum die Möglichkeit durch entsprechende Korrekturmaßnahmen den Bearbeitungsprozess fortzuführen.

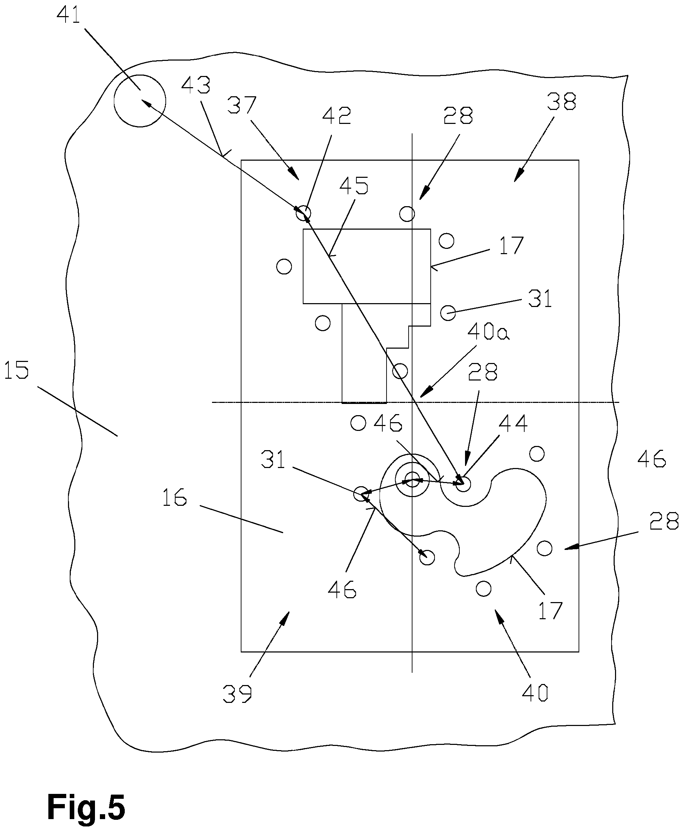

In Fig. 5 ist nunmehr eine schematische Darstellung für den Ablauf zum Festlegen der Reihenfolge der einzeln aufeinanderfolgend abzufragenden bzw. aufzufinden Erkennungsmerkmalen 28 dargestellt, wobei hierzu nur ein Teilausschnitt des Anzeigeelementes 15 mit dem geladenen Bearbeitungsjob 16 dargestellt ist.

Erfindungsgemäß wird nach dem Erstellen des Bearbeitungsjobs 16 und vor dem Start der Erfassung bzw. Detektieren des Werkstückes 7 ein Analyseprozess zum Festlegen des Ablaufes der nacheinander, abzufragenden Erkennungsmerkmale 28 durchgeführt. Zuerst wird die Graphik 17 bzw. der Graphikbereich in mehrere Sektoren 37, 38, 39, 40, insbesondere in vier Sektoren 37, 38, 39, 40 aufgeteilt, wobei hierzu zuerst ein Mittelpunkt 40a bzw. Zentrum oder ein optimaler Sektor-Punkt der Graphik 17 bzw. des Graphikbereiches ermittelt und festgelegt wird. Die Aufteilung in Sektoren 37, 38, 39, 40 ist durch strichpunktierte Linien in Fig. 5 schematisch dargestellt.

Nach der Aufteilung in Sektoren 37, 38, 39, 40 wird nunmehr die Reihenfolge der abzufragenden Erkennungsmerkmale 28 festgelegt, wobei als erstes abzufragendes Erkennungsmerkmal 28 ein erstes Erkennungsmerkmal 28 im ersten Sektor 37 ermittelt und festgelegt wird, d.h., dass vorzugsweise als erster Sektor 37, 38, 39, 40 jener Sektor 37 ermittelt wird, der den kürzesten Verstellweg der Fokuseinheit 12 von einem Ausgangspunkt bzw. einer Abstellposition 41, die in Form eines Kreises in Fig. 5 dargestellt ist, hat und in diesem Sektor 37 nunmehr jenes erste Erkennungsmerkmal 28, insbesondere eine erste Registermarke 42, mit dem von der Abstellposition 41 kürzesten Verfahrweg 43 ermittelt und festgelegt wird. Anschließend wird eine zweites abzufragendes Erkennungsmerkmal 28, insbesondere eine zweite Registermarke 44, in einem weiteren Sektor 37, 38, 39, 40, insbesondere im diagonalen Sektor 40, ermittelt und festgelegt, wobei vorzugsweise der kürzeste Verstellweg 45 von der vorher festgelegten ersten Registermarke 42 zum nächstgelegenen Erkennungsmerkmal 28 im nächsten Sektor 40 ermittelt wird. Hierbei ist es jedoch auch möglich, dass im nächsten Sektor 40 die Ermittlung des nächstgelegenen Erkennungsmerkmals 28 ausgehend von der Abstellposition 41 erfolgen kann. Nachdem die erste Registermarke 42 und die zweite Registermarke 44 bzw. die ersten und zweiten Erkennungsmerkmale 28 im Analyseprozess ermittelt wurden, werden anschließend die weiteren Erkennungsmerkmale 28 aufeinanderfolgend vorzugsweise immer jene Erkennungsmerkmale 28 mit dem kürzesten Verstellweg 46 des Lasers 5,6 bzw. der Fokuseinheit 12 ermittelt und festgelegt, d.h., dass immer die nächst gelegenste Registermarke 31 bzw. das nächst gelegenste Erkennungsmerkmal 28 ermittelt wird und somit die Reihenfolge zum Abfragen aller Erkennungsmerkmale 28 festgelegt wird. Die Reihenfolge kann für den entsprechenden Bearbeitungsjob 16 gespeichert werden, sodass ein derartiges Analyseverfahren nur einmal beim Erstellen des Bearbeitungsjob 16 durchgeführt wird.

Weiters ist vorgesehen, dass bei einem Bearbeitungsprozess nach der Erkennung der Erkennungsmerkmale 28 entsprechende Abbildungen hinterlegt bzw. gespeichert werden, die durch entsprechende Auswahl bzw. Anfahren mit einer Maus am Anzeigeelement 15 aufgerufen bzw. angezeigt werden. D.h., dass nach dem Start des Bearbeitungsprozess der Laserplotter 2 zuerst die erste Erkennungsmerkmal 28, also in diesem Ausführungsbeispiel die erste Registermarke 42, anfährt und diese mit der Optikeinheit 30 aufnimmt und entsprechen analysiert. Das von der Optikeinheit 30 aufgenommen Bild wird zu der entsprechenden Registermarke 42 im Bearbeitungsjob 16 gespeichert, sodass der User während oder nach dem Bearbeitungsprozess dieses Bild abfragen kann, in dem er einfach auf die Registermarke 42 fährt bzw. anklickst, worauf sich vorzugsweise ein neues Fenster mit dem gespeicherten Bild erscheint. Dieser Vorgang zum Hinterlegen der aufgefundenen Abbildungen der Registermarken 31, 42, 44 wird vorzugsweise bei jedem neuen Arbeitsprozess bzw. Bearbeitungsprozess durchgeführt, sodass zu späteren Zeitpunkte eine Analyse über die Qualität der aufgenommen Registermarken 31, 42, 44 durchgeführt werden kann und entsprechende Anpassungen bzw. Optimierungen bei den hinterlegten Parametern für Erkennungsmerkale 28 durchführen kann. Dabei ist es möglich, dass die Bilder bzw. Abbildungen dauerhaft in einem Speicher oder der Datenbank 20 zu den einzelnen Bearbeitungsprozessen, die beispielsweise mit einer laufenden Nummer versehen werden, hinterlegt werden oder dass die gespeicherten Bilder bzw. Abbildungen bei jedem Neustart eines Prozesses überschrieben werden. Dabei können auch Zusatzinformationen, wie beispielsweise die erkannte Position, Abweichungen, Erkennungsqualität, usw., gespeichert sind.

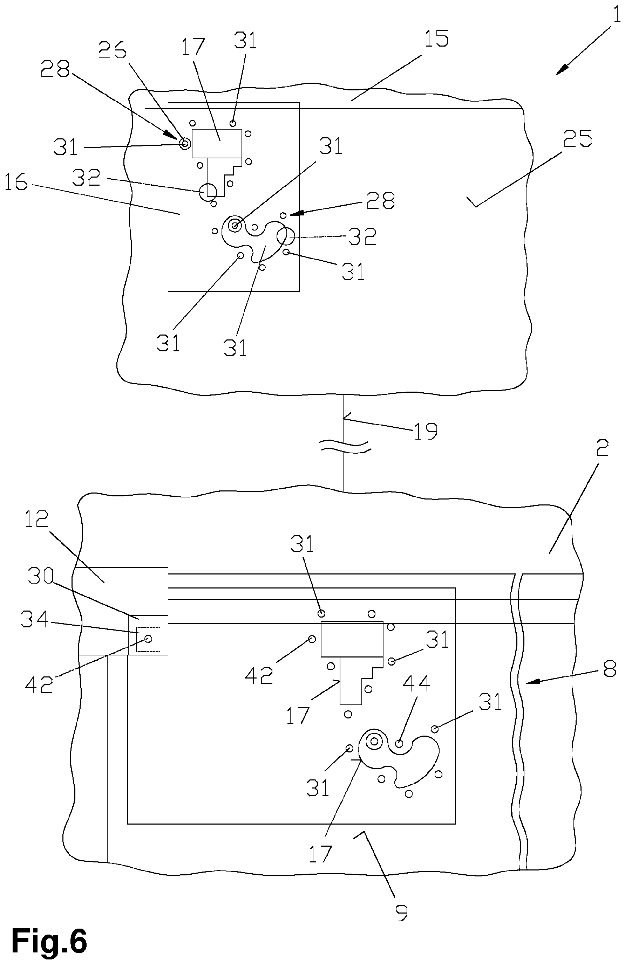

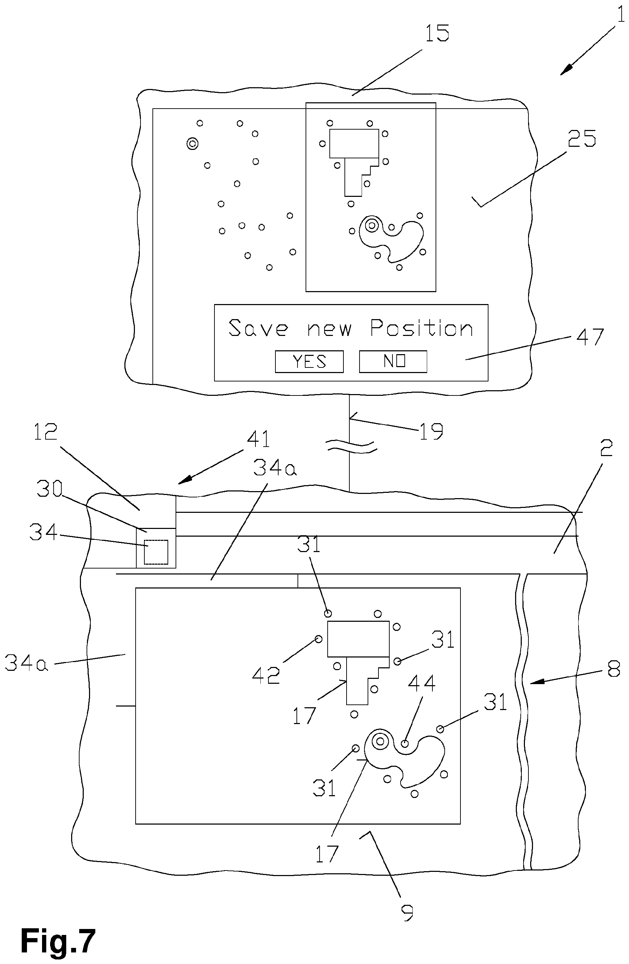

In Fig. 6 und 7 ist ein weitere Ausbildung zur Verbesserung des Handlings für den User gezeigt. Oftmals tritt der Fall ein, dass sich das Format des Werkstückes 7 oder die Skalierung der Graphik 17 verändert, sodass entsprechende Anpassungen vorgenommenen werden müssen, wenn sich dadurch die Position der Graphik 17 verschiebt.

Beispielsweise wird am Beginn das Werkstück 7 als A4-Format verarbeitet, sodass der User bei der Inbetriebnahme eine entsprechende Einstellung, wie in den Fig. 1 bis 5 vornimmt. Ändert sich jedoch im Laufe der Arbeiten das Format des Werkstückes 7 von beispielsweise A4 auf A3 so ändert sich oftmals die Position der Graphik 17 am Werkstück 7, wie dies in Fig. 6 im Bearbeitungsbereich 8 des Laserplotters 2 ersichtlich ist. D.h., dass in Fig. 6 der User nunmehr das Werkstück 7 in A3-Format eingelegt hat, wobei sich die auf das Werkstück 7 gedruckte Graphik 17 in der Position verschoben hat. Die Fokuseinheit 12 fährt, insbesondere mit dem Suchfenster 34 der Optikeinheit 30, die erste Position also die erste Registermarke 42, an, wo sich diese beim vorhergehenden Bearbeitungsprozess befunden hat. Diese erste Registermarke 42 ist strichliert dargestellt, um die vorige Position zu erkennen. Die Fokuseinheit 12, insbesondere die Optikeinheit 30 kann nunmehr aufgrund der Änderung der Graphikposition durch die Veränderung des Werkstückformates keine Registermarke 42 finden, worauf der Bearbeitungsprozess gestoppt wird. Im Computer 15 wird hingegen noch die ursprünglich Position des Werkstückes 7 in A4-Format angezeigt.

Dadurch wird also nach dem Start des Bearbeitungsprozess das erste Erkennungsmerkmal 28, insbesondere die erste Registermarke 42, nicht erkannt und der Bearbeitungsprozess wird automatisch gestoppt, wie in Fig. 6 ersichtlich. Der User kann nunmehr mit den Richtungstasten 22 am Laserplotter 2 die Fokussiereinheit 12 derart verstellen, dass das Suchfenster 34 der Optikeinheit 30 oder der Laser-Pointer 27 über das ersten Erkennungsmerkmal 28, insbesondere die erste Registermarke 42 der neuen Position, positioniert ist und somit diese erkannt werden kann, worauf der Bearbeitungsprozess fortgeführt wird. Grundsätzlich ist zu erwähnen, dass bei einer Positionierung und bei einem Start des Prozesses bei Nichterkennung eines Erkennungsmerkmals 28 im Suchfenster 34 immer automatisch eine Autokorrektur durchgeführt wird und ein zweiter Erkennungsversuch mit korrigierter Position der Optikeinheit 30 vorgenommen wird, bevor der Bearbeitungsprozess gestoppt wird. Dadurch kann der User ohne vorhergehende Einstellung vornehmen zu müssen, die Positionierung über die Optikeinheit 30 oder den Lasier-Pointer 27 vornehmen. Anschließend wird, wie zuvor beschreiben, durch Abtasten und Erkennen der weiteren Erkennungsmerkmale 28 die Lage des Werkstückes 7 und somit die Position der Graphik 17 bestimmt, sodass anschließend die Bearbeitung, insbesondere das Ausschneiden der Graphik 17 durchgeführt werden kann.
Die neuen Positionen der Erkennungsmerkmale 28 werden dabei gespeichert, sodass nach dem Bearbeitungsprozess die neue Positionen am Computer 15 angezeigt werden, wie dies in Fig. 17 ersichtlich ist, d.h., dass nach dem Bearbeitungsprozess oder nach der Erkennung der neuen Lage des Werkstückes 7 die tatsächliche erkannte Position der Erkennungsmerkmale 28 und/oder die dazugehörige Graphik 17 bzw. der Graphikbereich im Arbeitsbereich 25 am Computer 15 an der entsprechenden Position angezeigt wird. Dabei kann die neue Lage am Anzeigeelement 15 blinkend oder mit geänderter Farbe oder invers dargestellt werden oder es ist auch möglich, dass die alte Lage bzw. Position nur mit den Erkennungsmerkmalen 28 dargestellt wird und die neue Lage bzw. Position mit dem Erkennungsmerkmalen 28 und der Graphik 17, wie dies in Fig. 7 dargestellt, oder umgekehrt. Vorzugsweise wird am Anzeigeelemente 15 und/oder am Laserplotter 2 eine Meldung 47 zur Korrektur der neuen Lage bzw. Position der Graphik 17 bzw. des Graphikbereichs angezeigt, sodass bei Bestätigung, also bei Betätigen des Eingabebutton "YES" die neue Lage für den nächsten Bearbeitungsprozess korrigiert wird, wogegen bei "NO" die neue angezeigte Position der Graphik 17 bzw. der Erkennungsmerkmale 28 gelöscht wird und die ursprünglich Position für den nächsten Bearbeitungsprozess verwendet wird.

Wesentlich ist also bei einem derartigen erfinderischen Vorgehen, dass bei einer manuellen Korrektur während des Bearbeitungsprozess am Laserplotter 2 zur Erkennung vorzugsweise des ersten Erkennungsmerkmals 28 die am Anzeigeelement 15 im Arbeitsbereich 25 definierte Position mit der tatsächlichen Position im Bearbeitungsbereich 8 des Laserplotters 2 verglichen wird. Ergeben sich hierbei wesentliche Änderungen, so wird dies dem Nutzer mit entsprechenden Meldungen 47 angezeigt, sodass der Nutzer diese Änderungen einfach übernehmen kann.

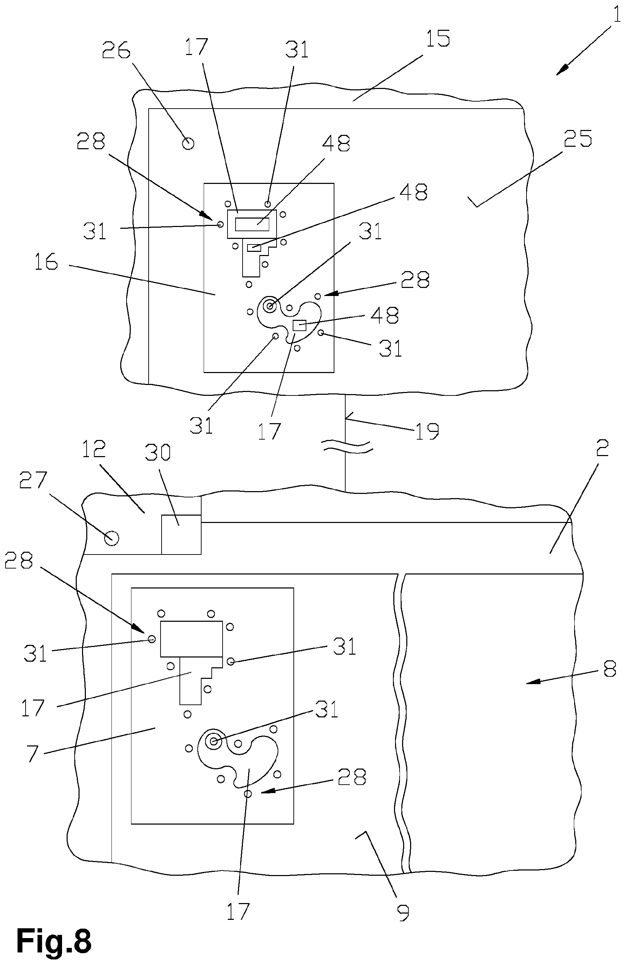

In Fig. 8 ist ein Bearbeitungsprozess bzw. ein Verfahren zum Gravieren, Markieren, Beschriften und/oder Schneiden von Werkstücken mit aufgebrachten Graphik, insbesondere einem Graphikbereich, mit dem Laserplotter 2 gezeigt, wobei die zuvor beschriebene Abläufe bzw. Verfahren ebenfalls für das Gravieren bzw. Beschriften verwendet wird.

Wie zuvor beschrieben, erfolgt zuerst das Erstellen und/oder Laden des Bearbeitungsjobs 16 mit einer Graphik 17 bzw. einem Graphikbereich und Erkennungsmerkmale 28 an dem Anzeigeelement 15, insbesondere dem Computer 15. Nachdem der Bearbeitungsjob 16 fertig gestellt ist, muss das Werkstück 7 dazu hergestellt werden, d.h., dass auf eine Grundkörper bzw. Rohling die Erkennungsmerkmale 28 und die Graphik 17 bzw. der Graphikbereich am Werkstück 7 aufgebracht werden, insbesondere erfolgt dies durch Drucken des Bearbeitungsjobs 16 auf das Werkstück 7. Das Werkstückes 7 wird anschließend in dem Bearbeitungsbereich 8 des Laserplotters 2 mit der Optikeinheit 30 zum Erfassen der Erkennungsmerkmale 28 eingelegt. Nach dem Start des Bearbeitungsprozess erfolgt eine Erfassung bzw. Detektierung des Werkstückes 7, insbesondere der Erkennungsmerkmale 28, um die Position und Ausrichtung des Werkstückes 7, insbesondere der aufgebrachten Graphik 17 bzw. des Graphikbereichs, im Bearbeitungsbereich 8 zu ermitteln, worauf der vollständige Bearbeitungsprozesses nach erfolgreicher Erkennung des Werkstückes 7, insbesondere der Graphik 17 bzw. des Graphikbereiches, durchgeführt wird.

Um eine Gravierung bzw. Beschriftung am Werkstück 7 vornehmen zu können, ist es erforderlich, dass ein oder mehrere Gravierbereiche 48 definiert werden, die bei der Erstellung der Bearbeitungsjob 16 in den Bearbeitungsjob 16 festgelegt werden. Die Gravierbereiche 48 und/oder Beschriftungsbereich werden in Abhängigkeit der Erkennungsmerkmale 28 festgelegt und gespeichert, oder dass in Abhängigkeit der Graphik 17 bzw. des Graphikbereiches der Gravur- und/oder Beschriftungsbereich 48 festgelegt und gespeichert wird, worauf beim Bearbeitungsprozess nach dem Erfassen einer oder mehrere Erkennungsmerkmale 28, insbesondere von Registermarken 31, 42, 44 und/oder Graphikelementen 32 bzw. einem Teil der Graphik und/oder Werkstückelementen 33, eine Position des den Erkennungsmerkmalen 28 zugeordneter Gravur- und/oder Beschriftungsbereich 48 erkannt wird.

Dabei ist es bei derartigen Laserplottern 2 wesentlich, dass beim Gravieren die Ausrichtung des Werkstückes 7 berücksichtigt wird, da die Laserplotter 2 die Fokussiereinheit 12 linear in horizontaler und vertikaler Richtung verstellt. Somit wird nach dem Erkennen der Lage bzw. der Ausrichtung des Werkstückes 7 und/oder der Graphik 17 bzw. des Graphikbereiches ein Gravur-Überprüfungsprozess durchgeführt.

Dazu ist es erforderlich, dass am Anzeigeelement 15, insbesondere am Computer 15, oder in einer Datenbank 20 bzw. der Steuereinheit 13 des Laserplotters 2 Parameter, wie beispielsweise Gravurwinkel-Abweichung, Ausrichtungswinkel-Abweichung, Gravurtiefe, Gravurbreite usw., für die Abweichung der optimal vorzugsweise horizontalen und/oder vertikalen Ausrichtung der Graphik 17 bzw. des Graphikbereiches und/oder des Werkstückes 7 gespeichert werden. Damit ist es möglich, dass entsprechend der Ausbildung und der möglichen Funktion des Laserplotters 2 die notwendigen Parameter eingestellt bzw. vergeben werden können, sodass beispielsweise bei Leistungsschwächeren Laserplottern 2 nur eine horizontale Gravur mit geringer Winkelabweichung von beispielsweise 1 bis 3° eingestellt werden kann, wogegen bei gut ausgestatteten Laserplottern 2 ein Gravurwinkel bis zu 45° oder mehr eingestellt wird. Wesentlich ist, dass eine Anpassung an das Gerät bzw. den Laserplotter 2 vorgenommen werden kann.

Somit wird beim Gravur-Überprüfungsprozess auf diese voreingestellten Werte Rücksicht genommen, so dass bei Überschreitung eines Toleranzbereiches der festgelegten Parameter der Gravurprozess gestoppt wird, wobei es dem User natürlich möglich ist, dass durch eine manuelle Eingabe eine Freigabe und somit eine Fortsetzung des Gravurprozesses zu ermöglichen.

Der Ablauf zum Positionieren und Bearbeiten des Werkstückes 7 kann wie zuvor beschrieben derart erfolgen, dass nach dem Einlegen des Werkstückes 7 in dem Bearbeitungsbereich 8 der Laser-Pointer 27 des Lasers 5, 6 auf eine beliebige Registermarke 31 positioniert wird, worauf ein auf dem Anzeigeelemente 15 dargestelltes Bearbeitungsbild der Graphik 17 bzw. des Graphikbereiches mit dem dazugehörigen Erkennungsmerkmale 28 am Anzeigeelement 15 derart verschoben wird, dass eine am Anzeigeelement 15 angezeigte Laserposition 26 mit der mit dem Laser-Pointer 27 markierten Erkennungsmerkmal 28 übereinstimmt. Nach dem Erstellen des Bearbeitungsjobs 16 und vor dem Start der Erfassung bzw. Detektieren des Werkstückes 7 wird wiederum ein Analyseprozess zum Festlegen des Ablaufes der nacheinander, abzufragenden Erkennungsmerkmale 28 durchgeführt, wobei die Graphik 17 bzw. der Graphikbereich in mehrere Sektoren 37, 38, 39, 40, insbesondere in vier Sektoren 37, 38, 39, 40 aufgeteilt wird, wobei als erste abzufragende Registermarke 42 im ersten Sektor 37 ermittelt und festgelegt wird, worauf eine zweite abzufragende Registermarke 44 in einem weiteren Sektor 37, 38, 39, 40, insbesondere im diagonalen Sektor 40, ermittelt und festgelegt wird und anschließend die weiteren Registermarken 31 aufeinanderfolgend vorzugsweise immer jene Registermarke 31 mit dem kürzesten Verstellweg 46 des Lasers 4, 6, ermittelt und festgelegt werden. Auch ist es möglich, dass nach Beendigung des Bearbeitungsprozess das Werkstück 7 aus dem Bearbeitungsbereich 8 entfernt wird und gegebenenfalls ein neues Werkstück 7 eingelegt wird, worauf durch Aktivierung eines Eingabemittels 21 am Laserplotter 2 oder automatisch durch Schließen eines Schutzdeckels 35 für den Bearbeitungsbereich 8 am Laserplotter 2 ein neuer Bearbeitungsprozess gestartet wird, so dass der Arbeitsprozesse für mehrere gleiche Gravuren beschleunigt werden kann. Dabei ist es auch möglich, dass bei einer Lageänderung der Graphik 17 eine entsprechende Meldung 47 erzeugt wird, d.h., dass nach dem Bearbeitungsprozess die tatsächliche erkannte Position der Erkennungsmerkmale 28 und/oder die dazugehörige Graphik 17 bzw. der Graphikbereich im Arbeitsbereich 25 am Arbeitsgerät 15 an der entsprechenden Position angezeigt wird.

Beispielsweise ist es möglich, dass mit einem derartigen Laserplotter 2 zuerst eine Gravur in einem Gravurbereich 48 innerhalb oder auch außerhalb der Graphik 17 vorgenommen wird, worauf diese Graphik 17 entsprechend der gespeicherten Vorgabe aus dem Werkstück 7 ausgeschnitten wird. Somit kann mit einem Laserplotter 2 die beschriebenen Ausbildung zum Positionieren, Erkennen, Bearbeiten der Fig. 1 bis 8 in einem Bearbeitungsprozess durchgeführt werden. Insbesondere kann die Steuerung dabei derart erfolgen, dass beispielsweise zum Gravieren der Laser 5 eingesetzt wird, wobei zum Ausschneiden der Graphik 17 aus dem Werkstück 7 der weitere Laser 6, der beispielsweise eine höhere Leistung aufweist, verwendet wird. Auch ist es möglich, dass bei Werkstücken 7 mit unterschiedlichen Materialien, die unterschiedlichen Bereiche mit den unterschiedlichsten Lasern 5 ,6 bearbeitete werden.

Es ist aber auch möglich, dass durch entsprechende Verwendung von Farben bei der Herstellung des Bearbeitungsjobs 16 eine einfachere Erkennung von unterschiedlichen Funktionen ermöglicht wird. Beispielsweise kann hinterlegt werden, dass für die Erkennungsmerkmale 28 die Farbe "Grün", für Schnittlinien die Farbe "Schwarz", für Gravur die Farbe "Blau" usw. verwendet wird. Damit wird eine einfach und schnelle Zuordnung der unterschiedlichen Gegebenheiten bzw. Arbeitsprozess im Bearbeitungsjob 16 definiert und gespeichert. Auch ist es möglich, dass für die unterschiedlichen Farben unterschiedliche Parameter und/oder Funktionen zugeordnet und gespeichern werden kann. Dies kann beispielsweise derart erfolgen, dass bei der Farbe "Grün" die Laserleistung für beide Laser 5, 6 ausgeschaltet bzw. auf null gestellt ist, wogegen bei der Farbe "Schwarz" zum Schneiden des Werkstückes 7 ein entsprechender Wert bzw. die volle Laserleistung hinterlegt ist. Selbstverständlich ist es auch möglich, dass die Erkennungsmerkmale 28 unterschiedliche Farben aufweisen können. Damit wird in vorteilhafter Weise erreicht, dass beispielsweise die Genauigkeit für den Bearbeitungsprozess gesteuert werden, indem für eine hohe Genauigkeit alle Erkennungsmerkmal 28 für die Positionierung abgefragt werden, wogegen bei einer geringen Genauigkeit, aber dafür höheren Geschwindigkeit, eine bestimmte Farbe durch den Nutzer deaktiviert werden kann, wodurch die Anzahl an Erkennungsmerkmalen 28 reduziert wird. Somit kann auch aufgrund der unterschiedlichen verwendeten Farben für die Erkennungsmerkmale 28 unterschiedliche Genauigkeitsgrade definiert werden.

Bei den zuvor beschriebenen Ausführungsbeispielen ist es auch möglich, dass spezielle Erkennungsmerkmale 28 erstellt und positioniert werden, d.h., dass beispielsweise für die erste und zweite unterschiedliche Registermarken 42, 44 (nicht dargestellt) verwendet werden und die weiteren Registermarken 31 wiederum anders ausgestaltet sind. Dadurch wird einerseits erreicht, dass der Benutzer optisch erkennen kann, welche Registermarke 31, 42, 44 am Werkstück 7 als erstes und zweites vom Laserplotter 2 angesteuert wird. Auch ist es damit einfacher, dass beispielsweise bei der Positionierung des Laser-Pointer 27 dieser auf die erste Registermarke 42 ausgeführt wird, um beispielsweise durch entsprechende Ausgestaltung der Form und des Aussehens dieser Registermarken 42 eine verbesserte Positionierung und Erkennung zu ermöglichen.

Die Verwendung von Erkennungsmerkmalen 28 bei den Ausführungsbeispielen für das Ausschneiden der Graphik 17 und das Gravieren der Graphik 17 hat den Vorteil, dass dadurch einerseits die Lage des Werkstückes 7 genau bestimmt werden kann und weiters eventuelle Verzerrungen oder Skalierung automatisch erkannt und mitberücksichtigt werden, d.h., dass bei entsprechenden Verzerrungen und/oder Skalierungen automatisch eine Anpassung erfolgt.

Wird hingegen ein Werkstück 7 mit spezieller Form, wie beispielsweise ein Handy, Tablet-Computer, usw., eingelegt, so ist es möglich, dass über die Optikeinheit 30 die Außenkanten des Werkstückes 7 oder spezielle Ausprägungen erkannt werden und dies anstelle der Registermarken 31, 42, 44 verwendet werden. Hierzu ist es möglich, dass im Bearbeitungsjob 16 dies definiert wird oder das entsprechende Produkte mit den Abmaßen hinterlegt sind.

Darüber hinaus ist es bei den zuvor beschriebenen Ausführungsbeispielen möglich, dass mit dem Laser-Pointer 27 angefahrene Positionen gespeichert werden können, wobei hierzu beispielsweise ein entsprechender Modus auswählbar ist oder das ein entsprechendes Eingabemittel 21 vorgesehen ist. Dadurch hat der Benutzer nämlich die Möglichkeit, dass er das Werkstück 7 beliebig in den Bearbeitungsbereich 8 einlegt und anschließend mit den Laser-Pointer 27 auf eine Erkennungsmarke 28 positioniert und durch diese Position speichert. Nach dem Speichern kann der Benutzer den Laser-Pointer 27 auf ein weiteres Erkennungsmerkmal 28 verfahren und wiederum diese Position speichern. Startet der Benutzer anschließend den Bearbeitungsprozess für das Gravieren und/oder Schneiden des Werkstückes 7 so kann der Laserplotter 2 und/oder der Computer 15 eine entsprechende Berechnung zur Erkennung der Lage des Werkstückes 7 durchführen und dieses bearbeiten. Für eine schnellere Berechnung ist von Vorteil, wenn der Benutzer mehrere Erkennungsmerkmale 28 markiert bzw. speichert und/oder die Graphik 17 derart verschiebt, dass diese mit der Ersten Position übereinstimmt, die beispielsweise am Computer 15 angezeigt wird. Es ist auch möglich, dass sämtlich gespeicherte Positionen angezeigt werden, sodass der Benutzer selbst eine gewisse Ausrichtung vornehmen kann und somit die Lageerkennung beschleunigt.

Es ist aber auch eine Funktion möglich, bei der der Nutzer zuerst am Computer 15 ein bestimmtes Erkennungsmittel 28 einer definierten Eingabemittels 21, insbesondere einer "Home-Taste" zuordnet, sodass anschließend der Nutzer das Werkstück 7 in den Bearbeitungsbereich 8 eingelegt, die Fokussiereinheit 12 auf das definierte Erkennungsmerkmal 28 stellt und durch Betätigen der "Home-Taste" nunmehr die Graphik 17 automatisch auf die Laserposition 26 am Anzeigeelement 15 verschoben wird.

Wird eine Einrichtung bzw. ein Laserplotter 2 ohne extern verbundene Komponente 14 betrieben, ist kann ein Bearbeitungsjob 16 mittels externe Speichermedien 49, wie beispielsweise einen USB-Stick, geladen werden, wie dies schematisch in Fig.1 gezeigt ist. Hierzu braucht der User lediglich das Speichermedium mit dem Laserplotter 2 verbinden, sodass eine entsprechende Erkennung eines oder mehrere gespeicherter Bearbeitungsjobs 16 erfolgt, die am Anzeigemonitor 24 angezeigt und auswählbar sind. Ist jedoch ein externer Monitor am Laserplotter 2 angeschlossen, so werden die Bearbeitungsjobs 16 auch oder nur auf diesen angezeigt. Es ist aber auch möglich, dass trotz verbundenen Computer 15 das Speichermedium 49 mit dem Bearbeitungsjob 16 am Laserplotter 2 verbunden wird, sodass der Computer 15 über den Laserplotter 2 auf das Speichermedium 49, insbesondere den USB-Stick, zugreift. Dass ein direkter Zugriff auf das Speichermedium 49 möglich ist, wenn das Speichermedium 49 direkt am Anzeigeelement 15 bzw. dem Computer 15 angeschlossen ist, ist selbstverständlich.

Der Ordnung halber sei abschließend darauf hingewiesen, dass zum besseren Verständnis des Aufbaus des Systems 1 und deren Komponenten bzw. dessen Bestandteile teilweise unmaßstäblich und/oder vergrößert und/oder verkleinert dargestellt wurden.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen bilden

## Patentansprüche

1. Verfahren zum Bearbeiten, insbesondere Schneiden, einer auf einem Werkstück (7) aufgebrachten Graphik (17), insbesondere eines Graphikbereichs, das folgenden Schritten umfasst:
- Erstellen und/oder Laden eines Bearbeitungsjobs (16) mit einer Graphik (17) bzw. einem Graphikbereich und Erkennungsmerkmale (28) an einem Anzeigeelement (15), insbesondere einem Computer;
- Aufbringen der Erkennungsmerkmale (28) und der Graphik (17) bzw. dem Graphikbereich am Werkstück (7);
- Anordnen des Werkstückes (7) in einem Bearbeitungsbereich eines Bearbeitungsgerätes (1), insbesondere einem Laserplotter (2) mit einer Optikeinheit (30) zum Erfassen der Erkennungsmerkmale (28);
- Erfassen bzw. Detektieren des Werkstückes (7), insbesondere der Erkennungsmerkmale (28), um die Position und Ausrichtung des Werkstückes (7), insbesondere der aufgebrachten Graphik (17) bzw. des Graphikbereichs, im Bearbeitungsbereich zu ermitteln;
- Durchführen des Bearbeitungsprozesses nach erfolgreicher Erkennung des Werkstückes (7), insbesondere der Graphik (17) bzw. des Graphikbereiches, **dadurch gekennzeichnet, dass**,
- nach dem Erstellen des Bearbeitungsjobs (16) und vor dem Start der Erfassung bzw. Detektieren des Werkstückes (7) ein Analyseprozess zum Festlegen des Ablaufes der nacheinander, abzufragenden Erkennungsmerkmale (28) durchgeführt wird;
- wobei die Graphik (17) bzw. der Graphikbereich in mehrere Sektoren (37,38,39,40), insbesondere in vier Sektoren (37,38,39,40) aufgeteilt wird;
- wobei als erstes abzufragendes Erkennungsmerkmal (28) ein Erkennungsmerkmal (28) im ersten Sektor (37,38,39,40) ermittelt und festgelegt wird;
- worauf eine zweites abzufragendes Erkennungsmerkmal (28) in einem weiteren Sektor (37,38,39,40), insbesondere im diagonalen Sektor (37,38,39,40), ermittelt und festgelegt wird;
- und anschließend die weiteren Erkennungsmerkmale (28) aufeinanderfolgend vorzugsweise immer jene Erkennungsmerkmale (28) mit dem kürzesten Verstellweg des Lasers (5,6), ermittelt und festgelegt werden.

2. Verfahren nach Anspruch 16, **dadurch gekennzeichnet, dass** als erster Sektor (37,38,39,40) jener Sektor (37,38,39,40) auserwählt wird, der der Ausgangsposition bzw. einer Abstellposition (41) des Lasers (5, 6) am nächsten liegt.

3. Verfahren nach Anspruch 16 oder 17, **dadurch gekennzeichnet, dass** als erstes Erkennungsmerkmal (28) jenes Erkennungsmerkmale (28) im erste Sektor (37,38,39,40) ermittelt wird, die der Ausgangsposition (41) der Fokussiereinheit (12) am nächsten liegt.

4. Verfahren nach einem oder mehreren der Ansprüche 16 bis 18, **dadurch gekennzeichnet, dass** als zweites Erkennungsmerkmale (28) jenes Erkennungsmerkmal (28) im zweiten Sektor (37,38,39,40) ermittelt wird, die der Ausgangsposition (41) der Fokussiereinheit (12) oder der ersten auserwählten Erkennungsmerkmal (28) am nächsten liegt.
